# EUROPEAN PATENT SPECIFICATION

(11) **EP 3 944 795 B1**
(45) Date of publication and mention of the grant of the patent: **06.05.2026**
(21) Application number: 21188869.8
(22) Date of filing: 30.07.2021
(51) Int. Cl.: A47J 42/54, A47J 42/40, B02C 7/17, B02C 7/13

(54) **MILLING SYSTEM FOR GRINDING GRAIN AND GRINDING APPARATUS THAT INCORPORATES IT**
MAHLSYSTEM ZUM MAHLEN VON GETREIDE UND MAHLVORRICHTUNG DAMIT
SYSTÈME DE BROYAGE DE GRAINS ET APPAREIL DE BROYAGE QUI L'INTÈGRE

(30) Priority: 31.07.2020 ES 202030823
(43) Date of publication of application: 02.02.2022
(73) Proprietor: Cunill Sanchez, D. Joel, 17410 Sils - Gerona (ES)
(72) Inventor: Cunill Sanchez, D. Joel, 17410 Sils - Gerona (ES)
(74) Representative: Ponti & Partners, S.L.P

(56) References cited:
- DE-A1- 2 418 473
- DE-B- 1 029 993
- DE-B- 1 159 144
- FR-A- 1 537 274
- JP-A- 2016 043 326

## Description

The present invention relates to a milling system for grinding grain and/or similar products, preferably coffee grain, which performs the grinding of the grains between two discs with relative movement between them. Likewise, the present invention also relates to a grinding apparatus that incorporates this milling system for grinding.

### Background of the invention

The grinding of seeds to create a ground product is widely known in coffee preparation processes, wherein the grinding of the coffee grain is performed to transform it into a product of a certain size for its preparation. This ground product may be of a larger or smaller particle size, according to the regulation of the grinding milling system used.

In conventional coffee grinding equipment, which typically incorporate a ground coffee dispensing system for its use in "espresso" type coffee-makers, the grain is ground by making it pass between two milling cutters by way of coaxial discs, which have a relative rotating movement between them.

Each one of these milling cutters has a multitude of teeth on the opposite inner faces, wherein said teeth are appreciably radial. At least one of the milling discs has teeth on its surface with different separation between them and of different height, depending on their position on said surface of the milling disc.

This configuration is characterized in that it allows the entry of the whole grain through its central area corresponding to the open area closest to the axis of rotation. This area is the one wherein there is a greater separation between the teeth of the two opposite faces of the milling discs, allowing the whole grains to pass between the two milling discs. The rotation of at least one of the milling discs with respect to the other means that the portions of coffee grain, as they are broken up and due to centrifugal force displace towards the outer perimeter, are ground in areas with teeth closer together and less free height between the milling discs and, therefore, performing a finer grinding.

The ground coffee exits the milling discs by their outer perimeter, by the same effect of centrifugal force, and it is carried to the dispensing system.

This grain breakage action during the rotation of the milling discs, which is typically performed above 1400 rpm, creates a friction and consequent increase in the milling disc temperature. The increase in this temperature, measured after making 200 coffees according to the conventional portafilter measurements of espresso coffee machines, reaches 40°C which causes a dilation of the two milling discs. This dilation of the milling discs creates a greater clearance between discs and poorer grinding, which also involves a greater consumption of coffee grains to make the same coffees.

To resolve this problem, and to be able to maintain the temperature of the milling discs at a suitable operating temperature, which is established at around 28 °C during execution of the grinding for 200 coffees, different solutions are known in the state of the art that introduce auxiliary cooling systems, such as the installation of a circulation of a coolant fluid in the grinding area or from an auxiliary fan to make the cooling air reach the milling discs.

These solutions make it necessary to introduce new auxiliary elements and need a more complicated design and a more complicated installation in the grinding apparatus which translates into a greater manufacturing complexity and higher costs.

Temperature detection systems are also known in the milling discs that allow a milling control system for grinding grain, the regulation of the rotation speed, decreasing it to reduce the effect of friction that makes the temperature of the milling discs increase.

This solution, although it allows controlling and lowering the temperature of the milling discs, so that they work at the most suitable temperature possible, slows the productivity of the milling system, so that the apparatus performance is affected. Grinding systems which provide a ventilation effect in the grinding chamber are known from DE 24 18 473 A1 and JP 2016 043326 A.

### Description of the invention

The objective of the present invention is to provide a milling system for grinding grain or such like, and to provide a grinding apparatus that includes a milling system, which manage to resolve the drawbacks of the state of the art, having other advantages that will be described below.

Firstly, it is necessary to clarify certain terms employed, in order that they should not be interpreted as limitative, or that obvious changes of configuration/application might vary the reference employed in the present description without changing the object of the protection.

In particular, it is important to make reference to the fact that the upper or lower positions described in this description come from a preferred configuration of vertical axis, so that said discs disposal with vertical coaxial axis means that the terminology of upper and lower is the most graphic and explanatory. In this respect, it is necessary to take into consideration that variation in the vertical disposal of the grain milling system will maintain a similar configuration and it is necessary to adapt the terminology to the new axis of reference with equivalent configuration.

In this way, and in accordance with the indicated objectives, with respect to a first aspect, the present invention is based on a milling system for grinding grain or such like, of those installed in grinding apparatus. The milling system comprises, at least, one set of two milling discs with opposite toothed milling cutter inner faces, between which the grain to grind is made to pass.

These milling discs are coaxial and have a relative rotating movement between them, wherein at least one of the milling discs is made to rotate with respect to the common axis by motorized means.

One of the milling discs has a central inlet opening of the grains to the space between the toothed inner surfaces. With respect to these toothed inner faces of the milling discs, they have a separation between upper opposite toothed surfaces that is greater in their central area and less in their perimeter area.

Advantageously, the milling system comprises, in addition to at least one set of two milling discs, a coaxial disc with one or more ejector blades of the ground product which rotates in conjunction with the rotating milling disc, and also comprising a ventilation system.

This ventilation system is formed, at least, by one or more openings in the base of the disc with ejector blades, which connect the lower part of the disc with ejector blades with the area of installation of the set of milling discs, and by an air impeller element, which rotates in conjunction with the milling disc and of the ejector blade disc.

The impeller element comprises a structure with a coaxial distribution of multiple vanes or blades appreciably radial to said axis of rotation, positioning said air impeller element between said base of the disc with ejector blades and one of the milling discs.

This configuration allows having a cooling directly of the milling discs, without having to add additional elements that complicate and make the grain milling system design more expensive, as occurs in the state of the art, since the milling system described here self-cools the milling cutters directly in its own action of rotation for the grinding, without having to cool the entire grinding chamber. The openings in the base of the ejector blade disc allows the passage of air of said lower part of the disc through them. It is the rotation of the air impeller element, as an element of independent function of the ejector blades, whichever of its configurations proposed below, that which creates a driving of air through said openings in the disc with extractor blades directing it, at least, to the lower walls of the milling disc adjacent to the extractor blade disc.

This air current, achieved by making use of the conventional rotating movement of the extractor blade disc and, preferably, the adjacent milling disc, allows cooling the set of milling discs, so that the temperature of said milling discs is maintained at optimum working levels, avoiding the dilation of the milling discs, thus having a correct grain grinding.

These milling discs, the air impeller element, and the disc with ejection blades, are preferably metal, and alternatively ceramic or other materials which, due to their hardness and resistance to abrasion or wear due to the grinding between discs, allows performing said function and they can be machined, injected or moulded to configure said parts with their described elements.

According to a possible embodiment of the invention, the air impeller element is an independent part that is coupled between the ejector blade disc and one of the milling discs, which rotates in conjunction with them.

This configuration allows having a system wherein the air impeller element can be made of a material alternative to the rest of the milling discs and disc with extractor blades. These materials used in the formation of the impeller element may be of ferrous and/or non-ferrous materials.

Optionally and alternatively to the above, the air impeller element consists of an element integrated in the disc with ejector blades, with them forming a single part, making the opening in their base coincide with the spaces opened between vanes or blades.

This embodiment allows having a configuration which reduces the number of parts in the system, with the consequent benefits of greater assembly simplicity and less possibility of malfunctioning. This configuration also allows, advantageously, the possibility of use of conventional milling discs in the milling system, without having to be modified, since their placement on the extractor blade disc with the incorporated air impeller element, does not make additional adaptation elements necessary as in conventional milling systems.

According to another optional embodiment of the invention and also alternatively to the two previous embodiments, the air impeller element consists of an element integrated in the milling disc adjacent to the disc with ejector blades, with them forming a single part.

This embodiment also allows having a configuration that reduces the number of parts in the system, with the consequent benefits of greater simplicity of assembly and less possibility of malfunctioning, and the benefits of the other embodiments of the present invention, that allow a reduction in grinding temperature.

In all the previous embodiments, the number and geometry of the blades or vanes are variable according to the final design. Likewise, the openings in the disc with ejector blades for the passage of cooling air can also be modified in number and dimension according to the design, provided that the sufficient passage of air is allowed to drive it on the milling disc.

Complementarily to the previous embodiments, the milling disc adjacent to the disc with ejector blades may incorporate a fixing element to the disc with ejector blades. This achieves the solid coupling of said milling disc to the disc with extractor blades, allowing a transmission of the rotating movement in a more effective manner.

In accordance with the purpose of the invention, with respect to a second aspect thereof, the invention is also based on a grinding apparatus, which comprises at least one grain milling system, and the collection or dispensing of the ground grain, with motorized means to transmit the rotation movement to the grain milling system. This grinding apparatus comprises at least one grain milling system such as that described in the first aspect described in the present specification.

The grinding apparatus, with this configuration achieves having an optimum performance and a suitable grinding quality for the type of ground product to be obtained, without there being variation in said performance or quality even during an extensive use.

In a possible embodiment, the grinding apparatus comprises one or more air inlet openings from the outside to the inside to the installation area of the grain milling system. In conventional grain grinding apparatus, this provision of air is obtained through its grain inlet opening, having its outlet via the ground grain storage and dispensing system.

In alternative embodiments, the air can be obtained by openings in other elements of the grinding apparatus that connect with the milling system. This express creation of openings, whether in the casing or sheath containing the grain milling system, allows guaranteeing a correct provision of sufficient air for cooling.

### Brief description of the drawings

In order to better understand the description made, a set of drawings has been provided which, schematically and solely by way of non-limiting example, represents several practical examples of embodiment.
Figure 1 is an exploded view of an embodiment wherein the grain milling system has a disc with ejector blades, an independent impeller element part, a rotating lower milling disc fixed to the disc with ejector blades and an upper milling disc (top view 1a, bottom view 1b).
Figure 2 is a sectional view perpendicular to the plane of the discs of figure 1, in its mounted position, without viewing the upper milling disc.
Figure 3 is an exploded view of an embodiment where the grain milling system has a disc with ejector blades, a rotating lower milling disc with integrated air impeller element fixed to the disc with ejector blades and an upper milling disc (top view 3a, bottom view 3b).
Figure 4 is a sectional view perpendicular to the plane of the discs of figure 3, in its mounted position, without viewing the upper milling disc.
Figure 5 is an exploded view of an embodiment where the grain milling system has a disc with ejector blades with integrated air impeller element, a rotating lower milling disc fixed to the disc with ejector blades and an upper milling disc (top view 5a, bottom view 5b).
Figure 6 is a sectional view perpendicular to the plane of the discs of figure 5, in its mounted position, without viewing the upper milling disc.
Figure 7 is an exploded view of an embodiment where the grain milling system has a disc with ejector blades with integrated air impeller element, a conventional rotating lower milling disc and an upper milling disc (top view 7a, bottom view 7b).
Figure 8 is a sectional view perpendicular to the plane of the discs of figure 7, in its mounted position, without viewing the upper milling disc.
Figure 9 is a schematic view of the grinding equipment with the grain milling system specified in figure 1.

### Description of a preferred embodiment

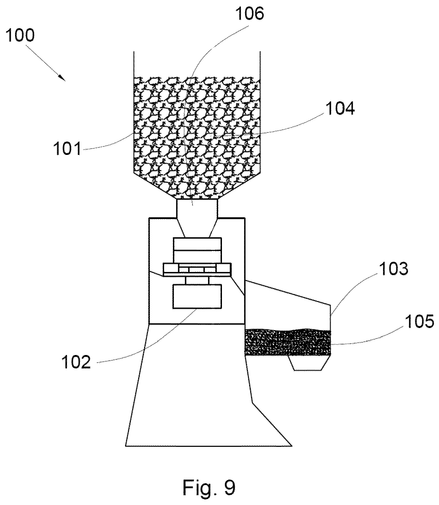

The grain milling systems (10) indicated in the following possible embodiments are integrated in a grinding apparatus (100) such as that which can be schematically viewed in figure 9, which is a coffee grinding apparatus.

This grinding apparatus (100), in its preferred embodiment includes a hopper (101) for grain (104) supply, a motor system (102) which transmits the rotation movement to the grain milling system (10) and a storage and dispensing system (103) of the ground grain (105).

The grinding apparatus (100) has an air provision opening (106), which in the present embodiment is performed through the grain supply opening from the hopper (101). This opening, already existing in conventional grinding apparatus and which is made use of in this embodiment, allows the intake of air from the outside to the grain milling system (10), which thanks to the configuration of the following embodiments allow a cooling of the milling disc sets.

In alternative embodiments, these openings may be made in other communication elements with the grain milling system (10).

This cooling is achieved by the embodiments that will be stated below, it has been tested and compared with the traditional system. To be able to assess the improvements obtained, tests have been performed which have measured the persistence of the cream created in an espresso coffee, according to the number of coffees made one after the other, a criterion which defines one of the quality parameters of a coffee.

The cream of an espresso coffee is mainly carbon dioxide generated during the coffee roasting and trapped within the cellular structure, which must quantitatively represent at least 10% of the volume of an espresso and have a persistence as close to 30 minutes as possible. This persistence of the cream in an espresso coffee is related, among other things, to the optimum grinding degree of the coffee grain, which, all other conditions equal, allows knowing the evolution of the coffee quality as the coffee grain is continuously ground during the first 200 cups, in doses of 6 cup batches.

The tests performed have started at an ambient temperature of 20°C, with a temperature of the milling discs before their operation of 20°C, keeping a grinding rate of 3 seconds every 8 grams of coffee and using 17 grams of coffee for every 2 cups of coffee. The persistence of the coffee cream in the cup over 30 minutes shall be classed as optimum.

During the use of a state of art coffee grain milling system without cooling system it achieves a suitable cream persistence, above 30 minutes, practically constant after cup 36 to cup 108. From this eighteenth batch of 6 cups, the temperature of the coffee grain milling disc set exceeds 28°C until reaching 45-50°C, which creates the dilation of the discs and a deficient grinding of the coffee grains and a significant reduction in the persistence of the cream with values under 15 minutes.

With the configuration of the embodiments of the invention that follow below, it has been possible to verify that, even though it takes slightly longer to reach the cream persistence levels, around cup number 60, afterwards the optimum levels are maintained until cup 200, end of test. The temperature of the milling disc set remains at maximum 28°C, which allows the optimum operation of the coffee grain milling system (10).

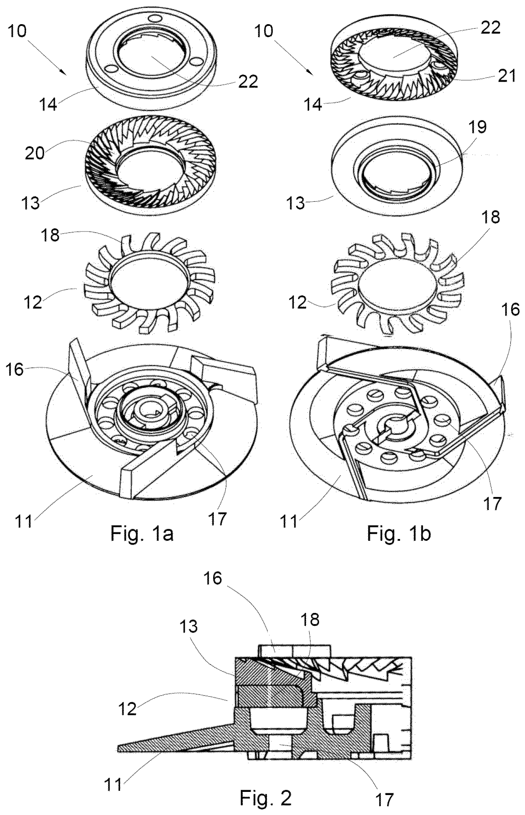

With respect to the grain milling system (10), in a first embodiment of the invention, as can be seen in figures 1 and 2, the grain milling system (10) has:
- a disc (11) with ejector blades (16) of the ground grain (105), whereto the rotating movement is transmitted from the motor system (102), ejecting said ground grain that falls in this disc (11) towards the outside by the centrifugal force generated in the rotation and its ejector blades (16), to be collected by the storage and dispensing system (103) of the grain grinding equipment (100); wherein the disc (11) has in its base openings (17) wherethrough air intake is allowed from the lower part of the milling system (10);
- an air impeller element (12) forming a part coaxial with the disc (11) with ejector blades (16), which has a structure of radial vanes (18), wherein the air impeller element (12) is mounted on the disc (11) which has openings (17) in its base, so that the rotating movement of this element (12) will create a forced air flow towards the upper part of the system (10) where the set (15) of milling discs (13, 14) is found;
- a lower milling disc (13), also coaxial, with toothed upper surface (20), which fixes to the disc (11) with ejector blades (16) also fixing the air impeller element (12) between them (11 and 13). The fixing is performed in the present embodiment by means of a thread (19) allowing a rotation in conjunction with the previous elements (11 and 12); and
- an upper milling disc (14), which does not have rotating movement and which in its lower face (21), opposite the upper face (20) of the lower milling disc (13), is toothed to grind the coffee grains (104) which enter through its central opening (22) and which grind as they displace towards the outer spaces between the milling discs, wherein the distance between the toothed surfaces (20 and 21) is less as these surfaces (20 and 21) are closer to their outer perimeter, in this way performing a finer grinding the further out the coffee grain displaces.

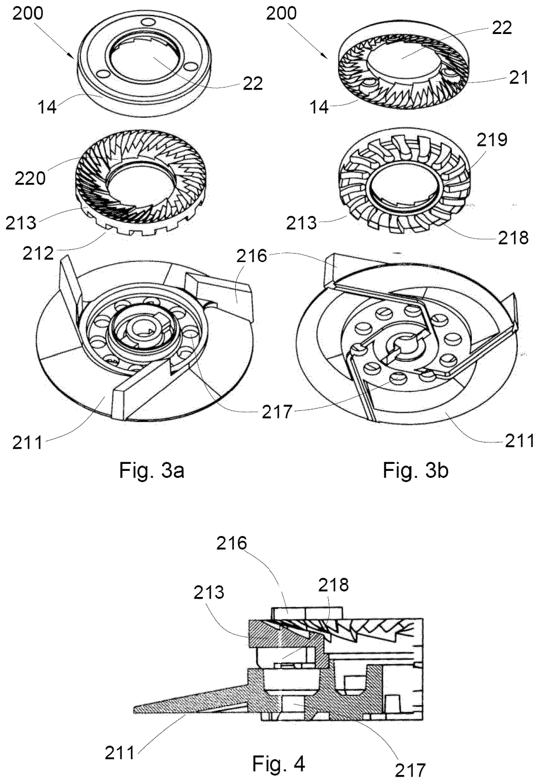

In accordance with a second embodiment of the invention, as can be seen in figures 3 and 4, the grain milling system (200) has:
- as with the first embodiment, a disc (211) with ejector blades (216) of the ground grain (105), whereto the rotating movement is transmitted from the motor system (102), ejecting said ground grain that falls in this disc (211) towards the outside by the centrifugal force generated in the rotation and its ejector blades (216), to be collected by the storage and dispensing system (103) of the grain grinding equipment (100); wherein the disc (211) has in its base openings (217) wherethrough air intake is allowed from the lower part of the milling system (200);
- a lower milling disc (213), coaxial to the disc (211) with ejector blades (216) whereto it is fixed by a thread (219) allowing a rotation in conjunction with the two elements (211 and 213), with toothed upper surface (220), wherein the lower milling disc (213) has in its face adjacent to the disc (211) with ejector blades (216) a groove by way of vanes (218) forming an air impeller element (212) integrated in the lower milling disc (213), so that the rotating movement of this lower milling disc (213) will create a forced air flow towards the grooved area of the lower milling disc (213) and towards the upper part of the system (200); and
- an upper milling disc (14), such as that indicated in the first embodiment, which does not have rotating movement and which in its lower face (21), opposite the upper face (220) of the lower milling disc (13), it is toothed to grind the coffee grains (104) which enter through its central opening (22) and which grind as they displace towards the outer spaces between the milling discs, wherein the distance between the toothed surfaces (220 and 21) is less as these surfaces (220 and 21) are closer to their outer perimeter, in this way performing a finer grinding the further out the coffee grain displaces.

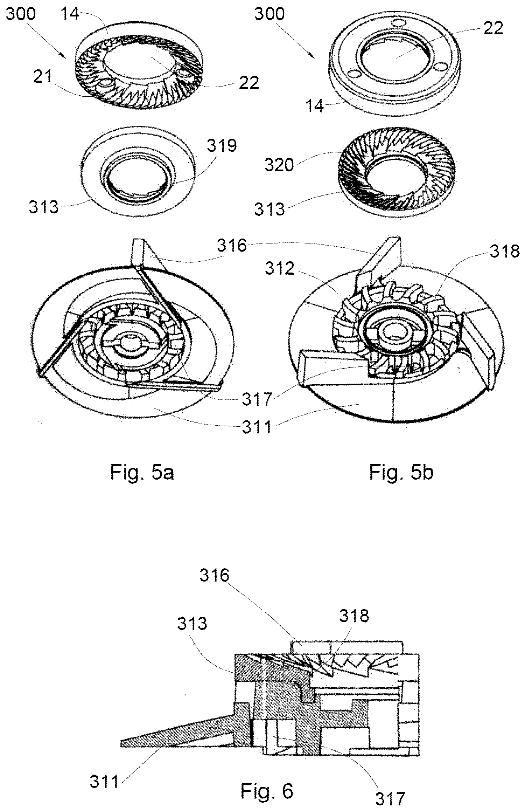

In accordance with a third embodiment of the invention, as can be seen in figures 5 and 6, the grain milling system (300) has:
- a disc (311) with ejector blades (316) of the ground grain (305), whereto the rotating movement is transmitted from the motor system (102) ejecting said ground grain which falls on this disc (311) towards the outside by the centrifugal force generated in the rotation and its ejector blades (316), to be collected by the storage and dispensing system (103) of the grain grinding apparatus (100); wherein the disc (311) has in its base openings (317) wherethrough air intake is allowed from the lower part of the milling system (300); and wherein in its face adjacent to the lower milling disc (313), it has a system of vanes (318) forming an air impeller element (312) integrated in the disc (311) with ejector blades (316), so that the rotating movement of this (311) will create a forced airflow towards the upper part of the system (300) where the set (315) of milling discs (313, 14) is found;
- a lower milling disc (313), coaxial with the disc (311) with ejector blades (316) whereto it is fixed by a thread (319) allowing a rotation in conjunction with it (311); with said disc lower milling disc (313) having an upper toothed surface (320); and
- an upper milling disc (14), which does not have rotating movement and which in its lower face (21), opposite the upper face (320) of the lower milling disc (313), it is toothed to grind the coffee grains (104) which enter through its central opening (22) and which grind as they displace towards the outer spaces between the milling discs, wherein the distance between the toothed surfaces (320 and 21) is less as these surfaces (320 and 21) are closer to their outer perimeter, in this way performing a finer grinding the further out the coffee grain displaces.

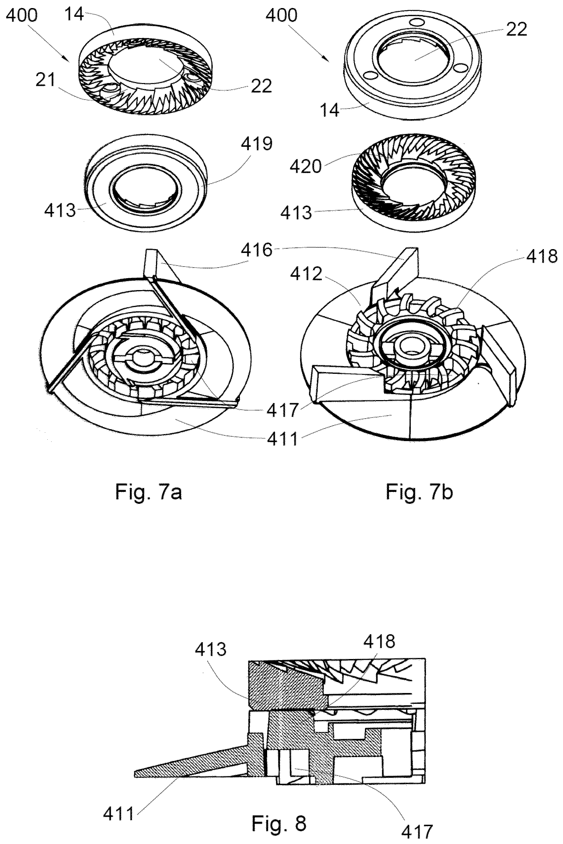

In accordance with a fourth embodiment of the invention, as can be seen in figures 7 and 8, the grain milling system (400) has:
- a disc (411) with ejector blades (416) of the ground grain (405), whereto the rotating movement is transmitted from the motor system (102) ejecting said ground grain which falls on this disc (411) towards the outside by the centrifugal force generated in the rotation and its ejector blades (416), to be collected by the storage and dispensing system (103) of the grain grinding apparatus (100); wherein the disc (411) has in its base openings (417) wherethrough air intake is allowed from the lower part of the milling system (400); and wherein in its face adjacent to the lower milling disc (413), it has a system of vanes (418) forming an air impeller element (412) integrated in the disc (411) with ejector blades (416), so that the rotating movement of it (411) will create a force airflow towards the upper part of the system (400) where the set (415) of milling discs (413, 14) is found;
- a lower milling disc (413), coaxial with the disc (411) with ejector blades (416), of conventional configuration without the need to adapt to the ventilation system as it is integrated in this disc (411), with support area (419) on the ejector blades (416) and a rotation in conjunction with said disc (411); with said lower milling disc (413) having a toothed upper surface (420); and
- an upper milling disc (14), which does not have rotating movement and which in its lower face (21), opposite the upper face (420) of the lower milling disc (413), it is toothed to grind the coffee grains (104) which enter through its central opening (22) and which grind as they displace towards the outer spaces between the milling discs, wherein the distance between the toothed surfaces (420 and 21) is less as these surfaces (420 and 21) are closer to their outer perimeter, in this way performing a finer grinding the further out the coffee grain displaces.

In all the previous embodiments, the air impeller element (12, 212, 312 and 412) has a number of vanes (18, 218, 318 and 418) which may be variable in number and separation between them, provided that it allows in its positioning the passage of air from the openings (17, 217, 317 and 417) of the disc base (11, 211, 311 and 411) with ejector blades (16, 216, 316 and 416).

Likewise, for all the previous embodiments, an air current is achieved from the lower part of the grain milling system (100, 200, 300 and 400), passing through the openings (17, 217, 317 and 417) of the disc base (11, 211, 311 and 411), by action of the vanes (18, 218, 318 and 418) of the air impeller element (12, 212, 312 and 412), reaching the adjacent face of the lower milling disc (13, 213, 313 and 413) cooling it, and towards the upper part of the system (100, 200, 300 and 400).

These embodiments allow a direct cooling of the milling cutters thanks to their own rotation movement to perform the grinding, without having to add auxiliary air provision elements and without having to cool the entire grinding chamber.

Although reference has been made to a specific embodiment of the invention, it is obvious to a person skilled in the art that the milling system for grain, as well as grinding apparatus incorporated by said grain milling system, are susceptible to numerous variations and modifications, and that all the details mentioned may be substituted by other technically equivalent ones, without departing from the scope of protection defined by the appended claims.

## Claims

1. Milling system for grinding grain or such like, of those that are installed in grinding apparatus, which comprises, at least, one set of two milling discs (13,14) with opposite toothed milling cutter inner faces, wherethrough the grains to grind are made to pass; wherein the milling discs (13,14) are coaxial and have relative rotating movement between them, wherein at least one of the milling discs is made to rotate with respect to the common axis by motorized means, with one of the milling discs having a central inlet opening (22) of the grains to the space between the toothed lower faces and with these milling discs(13, 14) having a separation between opposite toothed surfaces (20,21) of each milling disc, greater in its central area and less in its outer perimeter area, whereby the milling system (10) comprises, in addition to at least one set of two milling discs (13,14), a coaxial disc (11) with one or more ejector blades (16) of the ground product which rotates in conjunction with the rotating milling disc (13), the milling system being **characterized in**
further having a ventilation system, wherein said ventilation system is formed, at least, by one or more openings (17) wherethrough air intake is allowed from the lower part of the milling system (10), wherein the one or more openings (17) are in the base of the disc (11) with ejector blades (16), which connect the lower part of the disc (11) with ejector blades (16) to the installation area of the set (15) of milling discs (13,14), and by an air impeller element (12) which rotates in conjunction with the milling disc (13) and of the ejector blade disc (11), where said impeller element (12) comprises a structure with a coaxial distribution of multiple vanes (18) or blades appreciably radial to said axis of rotation, said air impeller element (12) being positioned between said base of the disc (11) with ejector blades (16) and one of the milling discs (13), creating a driving of air through said openings (17).

2. Milling system for grinding grain or such like, according to claim 1, wherein the air impeller element (12) is an independent part that is coupled between the disc (11) with ejector blades (16) and one of the milling discs (13), which rotates in conjunction with them.

3. Milling system for grinding grain or such like, according to claim 1, wherein the air impeller element (312) consists of an element integrated in the disc (311) with ejector blades (316), with them forming a single part, making the openings (317) in their base coincide with the open spaces between vanes or blades.

4. Milling system for grinding grain or such like, according to claim 1, wherein the air impeller element (212) consists of an element integrated in the milling disc (213) adjacent to the disc (211) with ejector blades (216), with them forming a single piece.

5. Milling system for grinding grain or such like, according to any of the previous claims, wherein the milling disc (13) adjacent to the disc (11) with ejector blades (16) incorporates a fixing element to the disc (11) with ejector blades (16).

6. Grinding apparatus, which comprises at least one grain milling system (10) and collection or dispensing of the ground grain, with motorized means to transmit the rotation movement to the grain milling system, **characterized in that** the grinding apparatus (100) comprises at least one grain milling system (10) such as that disclosed in claims 1 to 5.

7. Grinding apparatus, according to claim 6, wherein the grinding apparatus (100) comprises one or more air inlet openings (106) from the outside to the inside to the installation area of the grain milling system (10).

8. Grinding apparatus, according to claim 7, wherein the air inlet opening (106) from the outside to the inside to the installation area of the grain milling system (10) is the grain inlet opening from the grain supply hopper (101) to the grain milling system (10).

9. Grinding apparatus, according to claim 7, wherein the air inlet opening (106) from the outside to the inside of the installation area of the grain milling system (10) are openings in elements of the grinding apparatus (100) that connect with the grain milling system (10).

## Patentansprüche

1. Mahlsystem zum Mahlen von Korn oder dergleichen des Typs, der in einer Mahlvorrichtung installiert ist, das mindestens eine Gruppe von zwei Mahlscheiben (13, 14) mit entgegengesetzt gezahnten Mahlschneidwerk-Innenflächen umfasst, wobei bewirkt wird, dass das zu mahlende Korn durch diese hindurchtritt; wobei die Mahlscheiben (13, 14) koaxial sind und eine relative Drehbewegung zueinander aufweisen, wobei durch motorisierte Mittel bewirkt wird, dass sich mindestens eine der Mahlscheiben in Bezug auf die gemeinsame Achse dreht, wobei eine der Mahlscheiben eine mittige Einlassöffnung (22) für das Korn in den Raum zwischen den gezahnten unteren Flächen aufweist und wobei diese Mahlscheiben (13, 14) einen Abstand zwischen den gegenüberliegenden gezahnten Flächen (20, 21) jeder Mahlscheibe aufweisen, der in ihrem mittleren Bereich größer und in ihrem Außenumfangsbereich kleiner ist,
wobei das Mahlsystem (10) zusätzlich zu mindestens einer Gruppe von zwei Mahlscheiben (13, 14) eine koaxiale Scheibe (11) mit einem oder mehreren Auswurfblättern (16) für das gemahlene Erzeugnis umfasst, die sich in Verbindung mit der rotierenden Mahlscheibe (13) dreht,
wobei das Mahlsystem **dadurch gekennzeichnet ist, dass** es ferner ein Belüftungssystem aufweist, wobei das Belüftungssystem zumindest durch eine oder mehrere Öffnungen (17) gebildet ist, durch die ein Lufteinlass vom unteren Abschnitt des Mahlsystems (10) ermöglicht wird, wobei sich die eine oder die mehreren Öffnungen (17) in dem Sockel der Scheibe (11) mit Auswurfblättern (16) befinden, die den unteren Abschnitt der Scheibe (11) mit Auswurfblättern (16) mit dem Installationsbereich der Gruppe (15) von Mahlscheiben (13, 14) verbinden und durch ein Luft-Lüfterradelement (12), das sich in Verbindung mit der Mahlscheibe (13) und der Auswurfblattscheibe (11) dreht, wobei das Lüfterradelement (12) eine Struktur mit einer koaxialen Verteilung mehrerer Lamellen (18) oder Blätter, vorzugsweise radial zur Drehachse, umfasst, wobei das Luft-Lüfterradelement (12) zwischen dem Sockel der Scheibe (11) mit Auswurfblättern (16) und einer der Mahlscheiben (13) angeordnet ist, wobei es einen Antrieb von Luft durch die Öffnungen (17) erzeugt.

2. Mahlsystem zum Mahlen von Korn oder dergleichen nach Anspruch 1, wobei das Luft-Lüfterradelement (12) ein unabhängiges Teil ist, das zwischen der Scheibe (11) mit Auswurfblättern (16) und einer der Mahlscheiben (13) gekoppelt ist, die sich in Verbindung mit diesen dreht.

3. Mahlsystem zum Mahlen von Korn oder dergleichen nach Anspruch 1, wobei das Luft-Lüfterradelement (312) aus einem Element besteht, das in die Scheibe (311) mit Auswurfblättern (316) integriert ist, wobei sie ein einziges Teil bilden, wobei bewirkt wird, dass die Öffnungen (317) in ihrem Sockel mit den offenen Räumen zwischen Lamellen oder Blättern übereinstimmen.

4. Mahlsystem zum Mahlen von Korn oder dergleichen nach Anspruch 1, wobei das Luft-Lüfterradelement (212) aus einem Element besteht, das in die Mahlscheibe (213) integriert ist, die zu der Scheibe (211) mit Auswurfblättern (216) benachbart ist, wobei sie ein einziges Stück bilden.

5. Mahlsystem zum Mahlen von Korn oder dergleichen nach einem der vorhergehenden Ansprüche, wobei die Mahlscheibe (13), die zu der Scheibe (11) mit Auswurfblättern (16) benachbart ist, ein Element zur Befestigung an der Scheibe (11) mit Auswurfblättern (16) enthält.

6. Mahlvorrichtung, die mindestens ein Kornmahlsystem (10) und eine Sammlung oder Verteilung des gemahlenen Korns mit motorisierten Mitteln, um die Drehbewegung auf das Kornmahlsystem zu übertragen, umfasst, **dadurch gekennzeichnet, dass** die Mahlvorrichtung (100) mindestens ein Kornmahlsystem (10) nach den Ansprüchen 1 bis 5 umfasst.

7. Mahlvorrichtung nach Anspruch 6, wobei die Mahlvorrichtung (100) eine oder mehrere Lufteinlassöffnungen (106) von außen in den Innenraum des Installationsbereichs des Kornmahlsystems (10) enthält.

8. Mahlvorrichtung nach Anspruch 7, wobei die Lufteinlassöffnung (106) von außen in den Innenraum des Installationsbereichs des Kornmahlsystems (10) durch die Korneinlassöffnung vom Kornvorratsbehälter (101) zum Kornmahlsystem (10) gegeben ist.

9. Mahlvorrichtung nach Anspruch 7, wobei die Lufteinlassöffnung (106) von außen in den Innenraum des Installationsbereichs des Kornmahlsystems (10) durch Öffnungen in Elementen der Mahlvorrichtung (100), die mit dem Kornmahlsystem (10) verbinden, gegeben ist.

## Revendications

1. Système de mouture pour le broyage de grains ou similaires, de ceux qui sont installés dans un appareil de broyage, qui comprend, au moins, un ensemble de deux disques de mouture (13, 14) avec des faces internes dotées de fraises à dents opposées, à travers lesquelles les grains à broyer sont prévus pour passer ; dans lequel les disques de mouture (13, 14) sont coaxiaux et présentent un mouvement de rotation relatif entre eux, dans lequel au moins un des disques de mouture est amené à tourner par rapport à l'axe commun par l'intermédiaire de moyens motorisés, avec l'un des disques de mouture présentant une ouverture d'entrée centrale (22) des grains vers l'espace entre les faces inférieures dentées et avec ces disques de mouture (13, 14) présentant une séparation entre les surfaces dentées opposées (20, 21) de chaque disque de mouture, plus grande dans sa zone centrale et moins dans sa zone périphérique externe, moyennant quoi le système de broyage (10) comprend, en plus d'au moins un ensemble de deux disques de mouture (13, 14), un disque coaxial (11) avec une ou plusieurs pales d'éjection (16) du produit broyé qui tournent conjointement avec le disque de mouture (13) en rotation, le système de broyage étant **caractérisé en ce qu'**il comporte en outre un système de ventilation, dans lequel ledit système de ventilation est formé, au moins, par une ou plusieurs ouvertures (17) à travers lesquelles une entrée d'air est possible à partir de la partie inférieure du système de mouture (10), dans lequel les une ou plusieurs ouvertures (17) sont dans la base du disque (11) comprenant des pales d'éjection (16), connectant la partie inférieure du disque (11) comprenant des pales d'éjection (16) à la zone d'installation de l'ensemble (15) de disques de broyage (13, 14), et par l'intermédiaire d'un élément de turbine à air (12) qui tourne conjointement avec le disque de mouture (13) et le disque de lames d'éjection (11), où ledit élément de turbine (12) comprend une structure avec une distribution coaxiale de plusieurs aubes (18) ou pales sensiblement radiales par rapport audit axe de rotation, ledit élément de turbine à air (12) étant positionné entre ladite base du disque (11) comprenant des pales d'éjection (16) et l'un des disques de moutures (13), en créant un entraînement d'air à travers lesdites ouvertures (17).

2. Système de mouture pour le broyage de grains ou similaires, selon la revendication 1, dans lequel l'élément de turbine à air (12) est une partie indépendante qui est couplée entre le disque (11) comprenant des pales d'éjection (16) et l'un des disques de mouture (13), tournant conjointement avec eux.

3. Système de mouture pour le broyage de grains ou similaires, selon la revendication 1, dans lequel l'élément de turbine à air (312) consiste en un élément intégré dans le disque (311) comprenant des pales d'éjection (316), ceux-ci formant une pièce unique, faisant coïncider les ouvertures (317) dans leur base avec les espaces ouverts entre les aubes ou les pales.

4. Système de mouture pour le broyage de grains ou similaires, selon la revendication 1, dans lequel l'élément de turbine à air (212) consiste en un élément intégré dans le disque de mouture (213) adjacent au disque (211) comprenant des pales d'éjection (216), ceux-ci formant une pièce unique.

5. Système de mouture pour le broyage de grains ou similaires, selon l'une quelconque des revendications précédentes, dans lequel le disque de mouture (13) adjacent au disque (11) comprenant des pales d'éjection (16) intègre un élément de fixation au disque (11) comprenant des pales d'éjection (16).

6. Appareil de broyage, qui comprend au moins un système de mouture de grains (10) et de collecte ou de distribution des grains broyés, avec des moyens motorisés pour transmettre le mouvement de rotation au système de mouture de grains, **caractérisé en ce que** l'appareil de broyage (100) comprend au moins un système de mouture de grains (10) tel que divulgué dans les revendications 1 à 5.

7. Appareil de broyage selon la revendication 6, dans lequel l'appareil de broyage (100) comprend une ou plusieurs ouvertures d'entrée d'air (106) de l'extérieur vers l'intérieur vers la zone d'installation du système de mouture de grains (10).

8. Appareil de broyage, selon la revendication 7, dans lequel l'ouverture d'entrée d'air (106) de l'extérieur vers l'intérieur vers la zone d'installation du système de mouture de grains (10) est l'ouverture d'entrée de grains de la trémie d'alimentation en grains (101) vers le système de mouture de grains (10).

9. Appareil de broyage selon la revendication 7, dans lequel l'ouverture d'entrée d'air (106) de l'extérieur vers l'intérieur de la zone d'installation du système de mouture de grains (10) consiste en des ouvertures dans des éléments de l'appareil de broyage (100) qui se connectent au système de mouture de grains (10).
